(19) Europäisches Patentamt / European Patent Office / Office européen des brevets

(11) **EP 4 283 251 A1**

(12) **EUROPEAN PATENT APPLICATION**
published in accordance with Art. 153(4) EPC

(43) Date of publication:
**29.11.2023 Bulletin 2023/48**

(21) Application number: **21921071.3**

(22) Date of filing: **25.01.2021**

(51) International Patent Classification (IPC):
**G01B 11/16** $^{(2006.01)}$    **G01D 5/353** $^{(2006.01)}$

(52) Cooperative Patent Classification (CPC):
**G01B 11/16; G01D 5/353; G02B 6/02**

(86) International application number:
**PCT/JP2021/002392**

(87) International publication number:
**WO 2022/157963 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **TAKAGAKI, Kazunori**
**Tokyo 100-8310 (JP)**

• **ITO, Yohei**
**Tokyo 100-8310 (JP)**
• **KOBAYASHI, Hiroki**
**Tokyo 100-8310 (JP)**
• **KOYAMA, Tatsuya**
**Tokyo 100-8310 (JP)**
• **UTSUMI, Shigeru**
**Tokyo 100-8310 (JP)**

(74) Representative: **Meissner Bolte Partnerschaft mbB**
**Widenmayerstrasse 47**
**80538 München (DE)**

(54) **GAUGE CARRIER, OPTICAL FIBER DISPLACEMENT SENSOR, AND PRODUCTION METHOD FOR OPTICAL FIBER DISPLACEMENT SENSOR**

(57)    A gauge carrier (200) holds an optical fiber (100) which has a gauge portion (101) of a predefined length used for detection of strain provided in one axial part thereof. A center region (201) has a predefined stiffness and holds the gauge portion (100), where the length in the longitudinal direction of the gauge carrier (200) is equal to or greater than the length of the gauge portion (100). Two split regions (202) each have a stiffness different from the stiffness of the center portion (201), a total length of lengths of the respective split regions (202) in the longitudinal direction of the gauge carrier (200) is greater than the length of the center region (201) in the longitudinal direction of the gauge carrier (200), one of the split regions (202) is positioned in front of the gauge carrier (200) and holds a part of light (100) that is in front of the gauge portion (101), and the other is positioned in back of the gauge carrier (200) and holds a part of the optical fiber (100) that is in the back of the gauge portion (101).

Fig. 4

**Description**

Technical Field

The present invention relates to a gauge carrier for holding an optical fiber and an optical fiber displacement sensor including an optical fiber and the gauge carrier.

Background Art

For optical survey satellites, ability to capture high-resolution images with good legibility and stable image quality is desired. Accordingly, optical survey satellites are required to be capable of maintaining stable optical survey performance on their orbits over a long term. Realization of such an optical survey satellite necessitates a support structure with high dimensional stability and a sensor for assessing the stability of the support structure.

As sensors to detect deformation and strain of an object, strain gauges with resistor have been widely used. Since this type of a strain gauge obtains an amount of strain based on change in electric resistance, measures against electromagnetic noise are necessary. Also, since individual sensors require wiring, installation and handling are cumbersome in measurement at multiple points. Furthermore, there has been a problem of difficulty in attaching a sensor to a narrow portion.

Hence, optical fiber strain gauges equipped with optical fibers have been increasingly used in recent years. An optical fiber strain gauge does not require measures against electromagnetic noise because it obtains an amount of strain based on change in reflection and scattering states of light transmitting within an optical fiber. The optical fiber strain gauges also facilitate multi-point measurement since a large number of measurement points can be set on a single optical fiber. Further, since optical fiber strain gauges are smaller in size than electric strain gauges, they also can be disposed in narrow portions.

Additionally, by using a gauge carrier for holding an optical fiber strain gauge, an effect that cannot be obtained with an optical fiber strain gauge alone can be achieved as well.

Patent Literature 1 discloses an optical fiber strain sensor.

The optical fiber strain sensor of Patent Literature 1 includes a gauge carrier which has a constricted portion and varies in longitudinal cross section, and an optical fiber strain gauge that uses FBG (Fiber Bragg Gratings). In the optical fiber strain sensor of Patent Literature 1, the FBG portion of the optical fiber strain gauge is placed at the constricted portion of the gauge carrier.

Citation List

Patent Literature

Patent Literature 1: JP 2008-134 155 A

Summary of Invention

Technical Problem

In the technique disclosed in Patent Literature 1, strain of the FBG portion manifests itself distinctly and strain detection sensitivity can be improved because the FBG portion of the optical fiber strain gauge is configured to be placed at the constricted portion of the gauge carrier. It is also possible to decrease the strain detection sensitivity by increasing the width of the gauge carrier, instead of a constricted portion.

However, the optical fiber strain sensor of Patent Literature 1 has a problem of being unable to effectively improve or suppress the strain detection sensitivity for some shapes of the gauge carrier.

A major object of the present invention is to solve the aforementioned problem. More specifically, an object of the present invention is to allow the strain detection sensitivity to be effectively improved or suppressed.

Solution to Problem

A gauge carrier according to the present invention to hold an optical fiber which has a gauge portion of a predefined length used for detection of strain, provided in one axial part thereof, the gauge carrier includes:

a first holding portion which has a predefined stiffness and holds the gauge portion, wherein a length in a longitudinal direction of the gauge carrier is equal to or greater than a length of the gauge portion; and

two second holding portions, wherein each of the second holding portions has a stiffness different from the stiffness of the first holding portion, a total length of lengths of the respective second holding portions in the longitudinal direction of the gauge carrier is greater than the length of the first holding portion in the longitudinal direction of the gauge carrier, one of the second holding portions is positioned in front of the first holding portion and holds a part of the optical fiber that is in front of the gauge portion, and another is positioned in back of the first holding portion and holds a part of the optical fiber that is in back of the gauge portion.

Advantageous Effects of Invention

According to the present invention, strain detection sensitivity can be effectively improved or suppressed.

Brief Description of Drawings

FIG. 1      illustrates an optical fiber according to Embodiment 1.
FIG. 2      illustrates an FBG portion in the optical fiber according to Embodiment 1.
FIG. 3      illustrates the characteristics of a reflection spectrum obtained in the FBG portion according to Embodiment 1.
FIG. 4      is a perspective view illustrating an optical fiber displacement sensor according to Embodiment 1.
FIG. 5      is a side view, a front view, and a bottom view illustrating the optical fiber displacement sensor according to Embodiment 1.
FIG. 6      illustrates the optical fiber displacement sensor according to Embodiment 1 as attached to an object under measurement.
FIG. 7      is a perspective view illustrating an optical fiber displacement sensor according to Embodiment 2.
FIG. 8      is a side view and a front view illustrating the optical fiber displacement sensor according to Embodiment 2.
FIG. 9      illustrates installation of the optical fiber displacement sensor according to Embodiment 2 on a curved surface.
FIG. 10     is a perspective view illustrating an optical fiber displacement sensor according to Embodiment 3.
FIG. 11     is a side view and a front view illustrating the optical fiber displacement sensor according to Embodiment 3.
FIG. 12     illustrates manufacturing steps of an optical fiber displacement sensor according to Embodiment 4.

Description of Embodiments

Gauge carriers and optical fiber displacement sensors according to embodiments will be now described in detail with reference to the drawings. In description of the drawings, the same or corresponding portions are denoted with the same reference characters and overlapping descriptions are omitted.

Embodiment 1.

As noted above, the technique of Patent Literature 1 has a problem of being unable to effectively improve or suppress strain detection sensitivity for some shapes of the gauge carrier. In addition, the technique of Patent Literature 1 has a problem that the gauge carrier is large relative to an optical fiber and cannot be disposed in a narrow portion.
In view of these problems, the present embodiment describes a gauge carrier and an optical fiber displacement sensor that can effectively improve or suppress strain detection sensitivity and can be disposed in a narrow portion.

Description of structure

First, an optical fiber as a component of the optical fiber displacement sensor according to the present embodiment is described.
Optical fibers include multi-point optical fibers and distributed optical fibers. In a multi-point optical fiber, physical quantities are measured at one or more points within the single optical fiber. In the distributed optical fiber, physical quantities are continuously measured in the single optical fiber. In the multi-point optical fiber, one or more points serve as gauge portions. By contrast, for the distributed optical fiber, the entire optical fiber serves as a gauge portion. The gauge portion is a part that is used for detection of a physical quantity (specifically, strain).
In measurement of physical quantities with an optical fiber, the physical quantity is calculated on the basis of a frequency change in reflected light or scattered light at a measurement location. For the reflected light, reflected light at an FBG (Fiber Bragg Gratings) portion provided in the optical fiber is used, for example. For the scattered light, Rayleigh scattered light, Brillouin scattered light, Raman scattered light, and the like are used, for example.

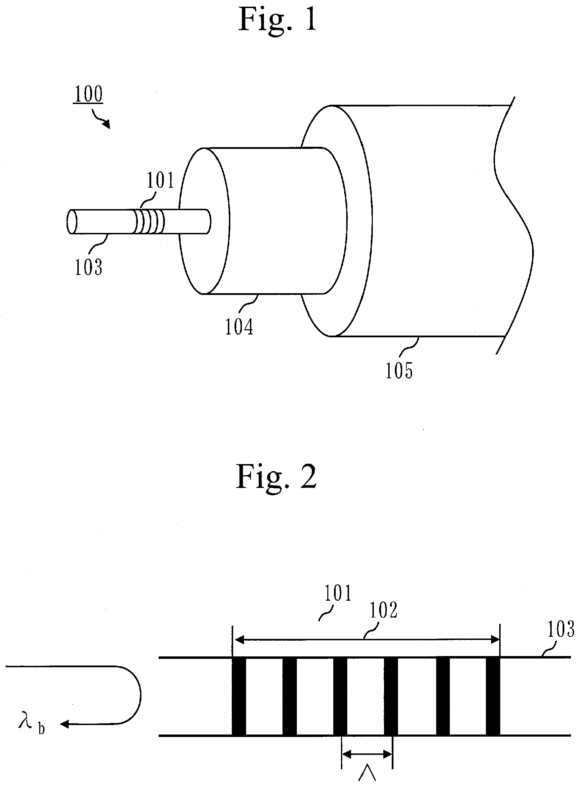

FIG. 1 illustrates an optical fiber 100 according to the present embodiment.

The optical fiber 100 according to the present embodiment is the multi-point optical fiber.

The optical fiber 100 includes a core 103, a clad 104 covering an outer circumference of the core 103, and a coating portion 105 covering an outer circumference of the clad 104. A gauge portion 101 is also provided in a part of the core 103. That is to say, the gauge portion 101 is provided in one axial part of the optical fiber 100. Specifically, the gauge portion 101 is positioned in the core 103 over a range of about 5 mm in an axis direction of the optical fiber 100. As mentioned above, the gauge portion 101 is a part used for detection of strain.

A diameter of the coating portion 105 is 250 $\mu$m, for example. A diameter of the clad 104 is 125 $\mu$m, for example. A diameter of the core 103 is 8 $\mu$m, for example.

Material of which the coating portion 105 is formed can include acrylate resin, polyimide resin, lead, aluminum alloy, gold, and the like, for example.

FIG. 2 illustrates details of the core 103.

As illustrated in FIG. 2, the core 103 is provided with an FBG portion 102 as the gauge portion 101. That is, in the optical fiber 100 according to the present embodiment, the FBG portion 102 is used as the gauge portion 101.

The FBG portion 102 is a portion in which refraction index modulation has been applied to the core 103 at period A. For a method of forming the refraction index modulation, an approach that irradiates the core 103 with a laser beam using a phase mask is used, for example. When wide band light is incident on the optical fiber 100, narrow band light corresponding to the period A and refraction index n of the FBG portion 102 is reflected in the FBG portion 102.

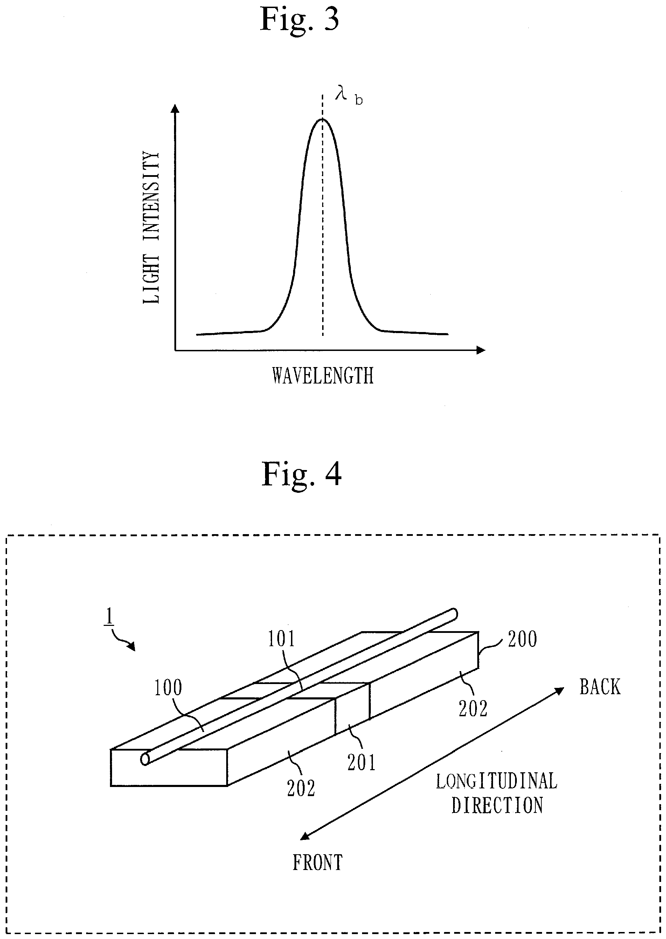

FIG. 3 is a graph illustrating the characteristics of a reflection spectrum obtained in the FBG portion 102 of FIG. 2. A wavelength at which the light intensity of the obtained reflection spectrum is maximized is called Bragg wavelength $\lambda_b$. The relation among the Bragg wavelength $\lambda_b$, the period A, and the refraction index n is represented by Expression (1) below.

$$\lambda_b = 2n\Lambda \qquad (1)$$

The period A varies with a temperature T of the FBG portion 102 and strain $\varepsilon$ that occurs in the FBG portion 102. A rate of change $\Delta\lambda_b$ in the Bragg wavelength $\lambda_b$ represented by Expression (1) is approximated by Expression (2) below.

$$\Delta\lambda_b = C_T\Delta T + C_\varepsilon\Delta\varepsilon \qquad (2)$$

Here, $C_T$ and $C_\varepsilon$ are coefficients for temperature and strain.

Strain can be measured by compensating for the effect of temperature from the rate of change $\Delta\lambda_b$ of the Bragg wavelength $\lambda_b$. For an instrument for measuring the reflection spectrum, a light spectrum analyzer, a wavemeter based on a Fabry-Perot interferometer, or the like is used, for example.

Next, the gauge carrier as another component of the optical fiber displacement sensor according to the present embodiment is described.

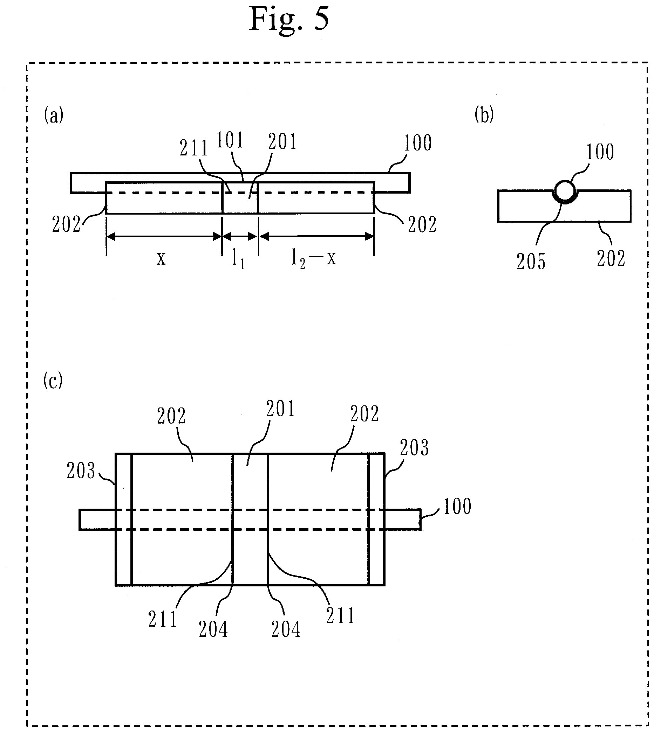

FIGS. 4 and 5 illustrate an optical fiber displacement sensor 1 according to the present embodiment.

FIG. 4 is a perspective view illustrating the optical fiber displacement sensor 1 according to the present embodiment.

(a) of FIG. 5 is a side view of the optical fiber displacement sensor 1. (b) of FIG. 5 is a front view of the optical fiber displacement sensor 1. (c) of FIG. 5 is a bottom view of the optical fiber displacement sensor 1.

A gauge carrier 200 is composed of one center region 201 and two split regions 202. Each of the center region 201 and the split regions 202 is a plate-shaped body.

The center region 201 corresponds to a first holding portion. The split regions 202 correspond to second holding portions.

The center region 201 lies between the split regions 202.

At least one gauge portion 101 of the optical fiber 100 is disposed so as to be fixed on the center region 201 and functions as a sensor portion. The center region 201 holds the gauge portion 101.

A length of the center region 201 in a longitudinal direction of the gauge carrier 200 (the axis direction of the optical fiber 100) is equal to or greater than a length of the gauge portion 101. The longitudinal direction of the gauge carrier 200 will be referred to just as the longitudinal direction hereinafter.

Each of the split regions 202 has a stiffness different from that of the center region 201.

A total length of the longitudinal lengths of the two split regions 202 is greater than the longitudinal length of the center region 201.

One of the split regions 202 is positioned in front of the center region 201 to hold a part of the optical fiber 100 that is in front of the gauge portion 101. The other split region 202 is positioned in the back of the center region 201 to hold a part of the optical fiber 100 that is in the back of the gauge portion 101.

In the present embodiment, front means the direction in which incident light travels straight in the optical fiber 100. As front and back are relative, either direction may be defined as front.

The two split regions 202 each have an affixing portion 203 at an end away from the center region 201.

The center region 201 and the split regions 202 are fixed at a contact surface 204 in a longitudinal cross section. The center region 201 and the split regions 202 are fixed by adhesion with adhesive 211, for example. By applying processing such as grinding with abrasive paper to the respective contact surfaces 204 of the center region 201 and the split regions 202, adhesive force can be increased.

The gauge carrier 200 may also have a groove 205 provided in a portion where the optical fiber 100 is installed for better installation of the optical fiber 100.

That is, as illustrated in (b) of FIG. 5, each of the center region 201 and the split regions 202 may have the groove 205 in a longitudinal direction for holding the optical fiber 100.

A part of the optical fiber 100 including the gauge portion 101 is fixed to the center region 201 of the gauge carrier 200. The center region 201 and the optical fiber 100 are fixed by adhesion with the adhesive 211, for example. By applying processing such as grinding with abrasive paper to the part of the center region 201 where the optical fiber 100 is to be fixed, adhesive force can be increased.

The optical fiber 100 may or may not be fixed with the split regions 202. However, since the state of fixation between the optical fiber 100 and the split regions 202 can affect the strain detection accuracy in the gauge portion 101, the optical fiber 100 is preferably not fixed to (is preferably separate from) the split regions 202.

It is also possible to fix the optical fiber 100 to the gauge carrier 200 with the optical fiber 100 being pre-tensioned. By pre-tensioning the optical fiber 100, measurement of strain in a direction of compression becomes possible.

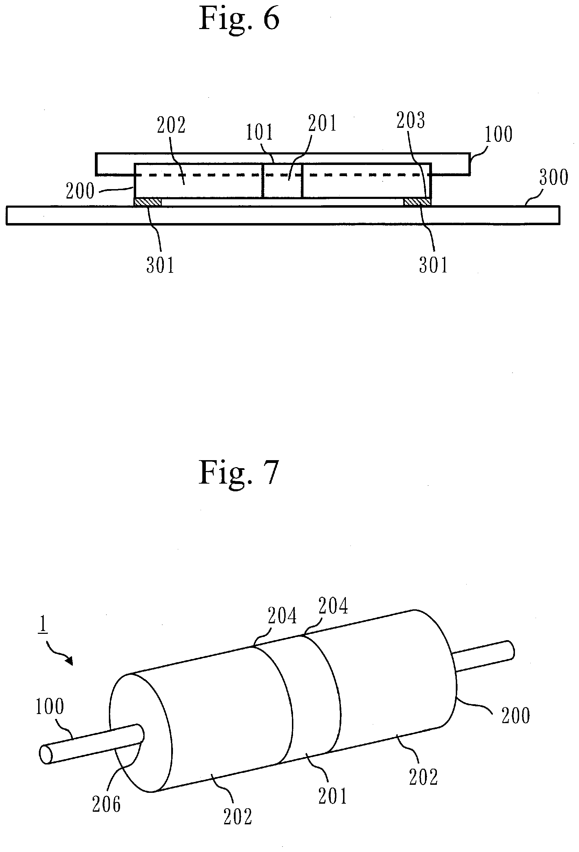

FIG. 6 illustrates the optical fiber displacement sensor 1 as attached to an object under measurement 300.

As illustrated in FIG. 6, the optical fiber displacement sensor 1 is fixed to the object under measurement 300 by the whole or only part of the affixing portion 203 provided on the gauge carrier 200. The optical fiber displacement sensor 1 and the object under measurement 300 are fixed together by adhesion with affixing adhesive 301, for example.

When the object under measurement 300 deforms in response to load, heat, or the like, the deformation is transmitted to the gauge carrier 200 attached to the object under measurement 300. As the center region 201 and the split regions 202 of the gauge carrier 200 are of different stiffnesses, a difference in the amounts of strain in the respective regions will occur. Specifically, the stiffness of the split regions 202 can be made higher than the stiffness of the center region 201. In this case, the center region 201 is easier to deform than the split regions 202 and deformation of the center region 201 is larger than the deformation of the split regions 202.

As a result, the strain that occurs in the center region 201 is larger than the strain that occurs in the object under measurement 300. That is, strain is amplified in the center region 201. Since the gauge portion 101 of the optical fiber 100 is fixed to the center region 201, a strain comparable to the strain in the center region 201 occurs in the optical fiber 100. Accordingly, a strain larger than in the object under measurement 300 occurs in the gauge portion 101 of the optical fiber 100, which can improve the detection sensitivity.

When the stiffness of the center region 201 is indicated as $E_1 A_1$, the stiffness of the split regions 202 is indicated as $E_2 A_2$, the longitudinal length of the center region 201 is indicated as $l_1$, and the total longitudinal length of the split regions 202 is indicated as $l_2$, a magnification factor $\alpha$ of strain in the center region 201 with respect to strain in the object under measurement 300 will be Expression (3) below.

FORMULA 1

$$\alpha = \left(1 + \frac{l_2}{l_1}\right) \Big/ \left(1 + \frac{E_1 A_1}{E_2 A_2} \cdot \frac{l_2}{l_1}\right) \qquad (3)$$

Since, on the gauge carrier 200, the total longitudinal length of the split regions 202 is greater than the longitudinal length of the center region 201 ($l_1 < l_2$), a strain amplification effect of twofold or more can be achieved by making the stiffness $E_2 A_2$ of the split regions 202 sufficiently high relative to the stiffness $E_1 A_1$ of the center region 201. In order to amplify strain to a certain magnification factor $\alpha_0$ or higher, the stiffness $E_1 A_1$ of the center region 201, the stiffness $E_2 A_2$ of the split regions 202, the length $l_1$ of the center region 201, and the total length $l_2$ of the split regions 202 are set such that Expression (4) below is satisfied.

FORMULA 2

$$\alpha_0 \leq \left(1 + \frac{l_2}{l_1}\right) \Big/ \left(1 + \frac{E_1 A_1}{E_2 A_2} \cdot \frac{l_2}{l_1}\right) \qquad (4)$$

The magnification factor $\alpha_0$ can be 10, for example.

In (a) of FIG. 5, the length of one of the split regions 202 is indicated as x and the length of the other is indicated as $l_2$-x.

A way of obtaining a difference between the stiffness of the center region 201 and the stiffness of the split regions 202 can be using different materials in the split regions 202 and the center region 201, for example. In this case, the two split regions 202 are of the same material.

By doing so, the optical fiber displacement sensor 1 can be miniaturized without changing the width of the gauge carrier 200. Specifically, SUS304 can be used as the material of the split regions 202 and epoxy resin can be used as the material of the center region 201. Since the elastic modulus of SUS304 (193 GPa) is about 100 times that of epoxy resin (2.4 GPa), a large stiffness difference can be obtained without changing the cross-sectional shape of the split regions 202. The gauge carrier 200 can be shaped such that it is 5 mm in width, 2 mm in height, and 10 mm in length ($l_1$) in the center region 201, and is 5 mm in width, 2 mm in height, and 140 mm in length (12) in the split regions 202. In this case, the magnification factor $\alpha$ of strain in the center region 201 relative to strain in the object under measurement 300 is about 12.8 times according to Expression (3). As a result, a small-sized optical fiber displacement sensor 1 with high strain detection sensitivity can be realized.

Description of effects of the embodiment

According to the present embodiment, the gauge carrier 200 and the optical fiber displacement sensor 1 that can effectively improve or suppress strain detection sensitivity can be realized. According to the present embodiment, the optical fiber displacement sensor 1 that can be disposed in a narrow portion can be realized as well.

As described above, the optical fiber displacement sensor 1 according to the present embodiment is composed of the optical fiber 100 having the gauge portion 101 and the gauge carrier 200 holding the optical fiber 100.

The gauge carrier 200 is formed of the two split regions 202 and the center region 201 lying between the split regions 202 and having a different stiffness than that of split regions 202, where the total longitudinal length of the split regions 202 is greater than the longitudinal length of the center region 201.

The gauge portion 101 of the optical fiber 100 is fixed on the center region 201, and two split regions 202 of the gauge carrier 200 each have the affixing portion 203 at the end away from the center region 201. When deformation occurs in the object under measurement 300 fixed by the affixing portion 203 provided on the gauge carrier 200, a difference occurs in the amounts of strain in the center region 201 and in the split regions 202 of the gauge carrier 200 because they have different stiffnesses.

Thus, strain that occurs in the gauge portion 101 of the optical fiber 100 can be amplified or suppressed to improve or suppress strain detection sensitivity. The optical fiber displacement sensor 1 according to the present embodiment can also be disposed in a narrow portion.

Although, in the present embodiment, the grating length (the length of the gauge portion 101) has been described as being about 5 mm, other grating lengths may be used as long as light is sufficiently reflected. For example, grating lengths such as 1 mm, 2 mm, 10 mm, and 25 mm may be used.

In the present embodiment, an instance where the stiffness of the split regions 202 is higher than the stiffness of the center region 201 and strain is amplified, has been described. However, the optical fiber displacement sensor 1 requires only that the stiffness of the split regions 202 and the stiffness of the center region 201 are different from each other. When the stiffness of the split regions 202 is lower than the stiffness of the center region 201, strain in the center region 201 can be suppressed. This enables strain to be measured without breakage of the optical fiber 100 even when deformation of the object under measurement 300 is large.

In the present embodiment, the way of fixation of the gauge carrier 200 and the optical fiber 100 and the way of fixation of the center region 201 and the split regions 202 have been described as adhesion with the adhesive 211. Other methods may be used as long as the gauge carrier 200 and the optical fiber 100 as well as the center region 201 and the split regions 202 are fixed to each other. For example, joint fittings, joints, and the like may be used.

For the adhesive 211, acrylic-based, epoxy-based, silicon-based, phenolic-based, polyethylene-based, polyimide-based, urethane-based, or polyurethane-based adhesive and the like can be used, for example. Conditions for hardening the adhesive 211 vary depending on the adhesive 211 used.

In the present embodiment, an instance where grinding with abrasive paper is performed as pretreatment on a fixation surface has been described. Instead of grinding with abrasive paper, grinding with abrasive cloth, a wire brush, sand blasting, and the like may be performed. Apart from grinding, chemical treatment, primer treatment, ultraviolet irradiation treatment, plasma treatment, and the like may also be performed.

Although, in the present embodiment, the amplification $\alpha_0$ of strain has been described as being 10, other amplification may be used in accordance with strain that is expected in the object under measurement 300. For example, amplification such as 2, 3, 5, 25, 50, and 100 may be used.

Although the present embodiment uses different materials in the center region 201 and the split regions 202 as a way of obtaining a difference between the stiffness of the center region 201 and the stiffness of the split regions 202, the center region 201 and the split regions 202 may also be different in thicknesses. In this case, the two split regions 202 are of the same thickness.

Since a different thickness leads to a different cross sectional area, a difference in stiffness can be obtained even when the same material is used for the center region 201 and the split regions 202.

In the present embodiment, an instance where SUS304 is used as the material of the split regions 202 and epoxy resin is used as the material of the center region 201, has been described. Materials other than SUS304 and epoxy resin may be used. For example, silicon, polyimide resin, fluororesin, nylon resin, chloroprene rubber, silicone rubber, stainless steel, aluminum alloy, superinvar, and the like can be used.

In Embodiment 1, an instance that uses a single center region 201 has been described. However, the center region 201 consisting of two or more members may be used as long as an integral center region 201 is obtained after being fixed to the optical fiber 100 and the split regions 202. In this case, the two or more members are fixed such as by adhesive to create an integral center region 201.

Embodiment 2.

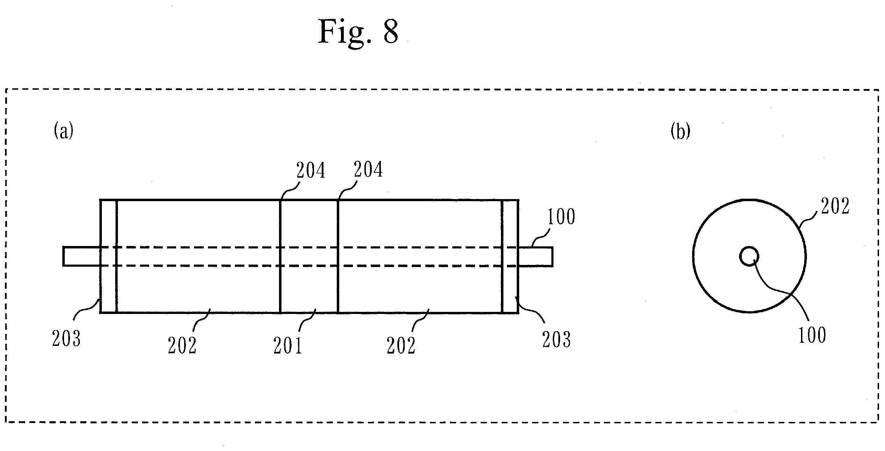

FIGS. 7 and 8 illustrate the optical fiber displacement sensor 1 according to Embodiment 2.

FIG. 7 is a perspective view illustrating the optical fiber displacement sensor 1 according to Embodiment 2.

(a) of FIG. 8 is a side view illustrating the optical fiber displacement sensor 1. (b) of FIG. 8 is a front view illustrating the optical fiber displacement sensor 1.

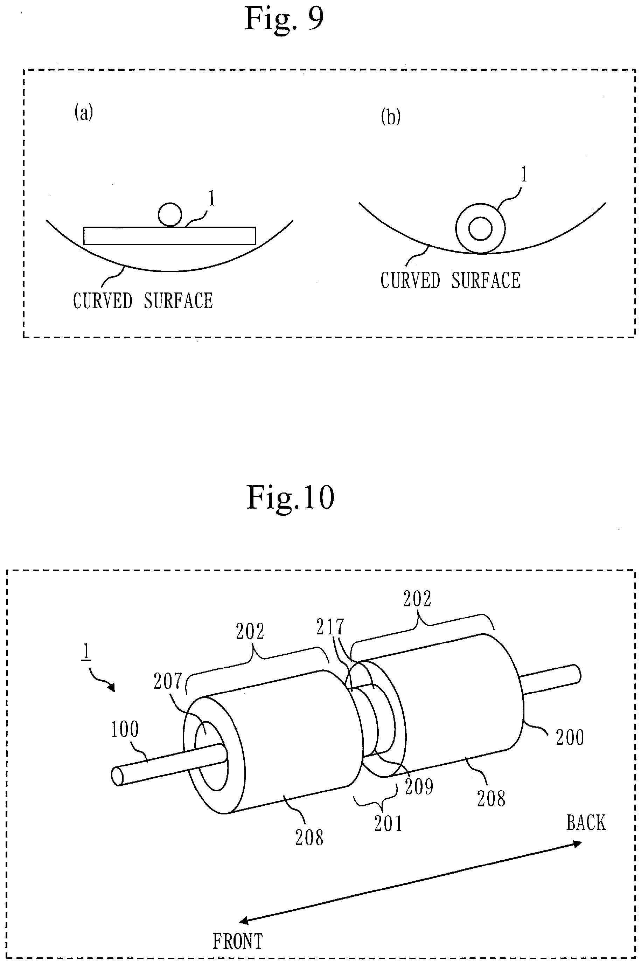

(a) of FIG. 9 illustrates an example where the optical fiber displacement sensor 1 according to Embodiment 1 is disposed on a curved surface. (b) of FIG. 9 illustrates an example where the optical fiber displacement sensor 1 according to Embodiment 2 is disposed on a curved surface.

The cross sectional shape of the gauge carrier 200 according to Embodiment 1 is a rectangle. By contrast, the cross sectional shape of the gauge carrier 200 according to Embodiment 2 is a hollow closed cross section. That is, while each of the center region 201 and the split regions 202 is a plate-shaped body in Embodiment 1, each of the center region 201 and the split regions 202 is a closed-section hollow circular cylinder in Embodiment 2. The center region 201 and the two split regions 202 are fixed at the contact surface 204 with adhesive, for example.

In Embodiment 2, each of the center region 201 and the split regions 202 has a hole 206 for holding the optical fiber 100. The hole 206 is provided substantially in the centers of the center region 201 and the split regions 202.

Then, in Embodiment 2, the optical fiber 100 is inserted into the hole 206. A part of the optical fiber 100 including the gauge portion 101 is fixed on an inner surface (in the hole 206) of the center region 201 of the gauge carrier 200.

Being thus configured, the gauge carrier 200 according to Embodiment 2 is easy to attach to a curved shape such as a cylinder as illustrated in (b) of FIG. 9.

The dimensions of the gauge carrier 200 according to Embodiment 2 can be the following. For example, the outer diameter of the center region 201 can be 3 mm, the inner diameter can be 0.4 mm, and the length ($l_1$) can be 10 mm. The outer diameter of the split regions 202 can be 3 mm, the inner diameter can be 0.4 mm, and the length (12) can be 140 mm.

If SUS304 is used as the material of the split regions 202 and epoxy resin is used as the material of the center region 201 as in Embodiment 1, the magnification factor $\alpha$ of strain in the center region 201 relative to strain in the object under measurement 300 is about 12.8 times according to Expression (3). Other structures are similar to Embodiment 1.

As described above, in the optical fiber displacement sensor 1 according to Embodiment 2, the cross sectional shape of the gauge carrier 200 is a hollow closed cross section.

The optical fiber displacement sensor 1 according to Embodiment 2 thereby can provide an effect of being easily attachable to a curved shape such as a cylinder, in addition to similar effects to Embodiment 1.

Although, in the present embodiment, the hollow closed cross section of the gauge carrier 200 has been described as being substantially circular, it may also be substantially semi-circular, substantially sector, substantially elliptical, substantially rectangular, substantially square, and the like, instead of being substantially circular. That is, each of the center region 201 and the split regions 202 may also be any of a closed-section hollow half cylinder, a closed-section hollow sector cylinder, a closed-section hollow elliptical cylinder, and a closed-section hollow square column.

Although, in the present embodiment, an instance where each of the center region 201 and the split regions 202 is a closed-section hollow circular cylinder has been described, each of the center region 201 and the split regions 202 may be a solid columnar body with the hole 206 therethrough.

Embodiment 3.

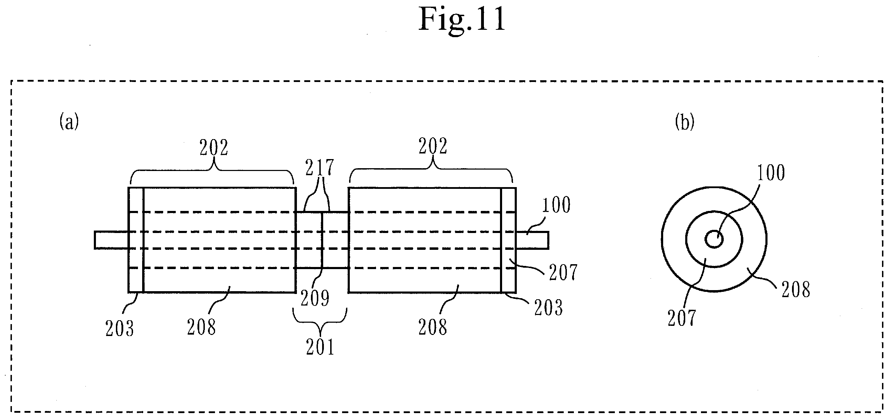

FIGS. 10 and 11 illustrate the optical fiber displacement sensor 1 according to Embodiment 3.

FIG. 10 is a perspective view illustrating the optical fiber displacement sensor 1 according to Embodiment 3.

(a) of FIG. 11 is a side view illustrating the optical fiber displacement sensor 1 according to Embodiment 3.

(b) of FIG. 11 is a front view illustrating the optical fiber displacement sensor 1 according to Embodiment 3.

In Embodiments 1 and 2, a structure where the center region 201 and the split regions 202 of the gauge carrier 200 are fixed together at the contact surfaces 204 in longitudinal cross sections has been described. In contrast, the gauge carrier 200 according to Embodiment 3 consists of a hollow inner columnar body 207 located in the entire areas of the center region 201 and the split regions 202 and separate hollow outer columnar bodies 208 located only in the split regions 202, such that the split regions 202 are double-structured.

In the present embodiment, the center region 201 is a middle part of the inner columnar body 207.

The split region 202 that is positioned in front of the center region 201 is a front part of the middle part of the inner columnar body 207 and the outer columnar body 208 covering the front part.

The split region 202 that is positioned in the back of the center region 201 is a back part of the middle part of the inner columnar body 207 and the outer columnar body 208 covering the back part.

Such a structure makes a breakage less likely to occur between the center region 201 and the split regions 202 and also improves the manufacturability of the optical fiber displacement sensor 1.

Also in the present embodiment, the stiffness of the center region 201 and the stiffness of the split regions 202 are different because the thickness of the center region 201 and the thickness of the split regions 202 are different.

In the present embodiment, the optical fiber 100 is inserted into the inner columnar body 207. A part of the optical fiber 100 including the gauge portion 101 is fixed to the inner surface of the inner columnar body 207 at the position of the center region 201.

As illustrated in FIGS. 10 and 11, the shape of the gauge carrier 200 according to the present embodiment is substantially cylindrical. That is, in the present embodiment, the inner columnar body 207 and the outer columnar bodies 208 are each a hollow circular cylinder.

The inner diameter of the outer columnar bodies 208 is larger than the outer diameter of the inner columnar body 207. The inner columnar body 207 is positioned on the inner surfaces of the outer columnar bodies 208.

In the present embodiment, the inner columnar body 207 is formed of two members as illustrated in FIGS. 10 and 11. The two members forming the inner columnar body 207 will be each referred to as component member 217 hereinafter.

In the example of FIGS. 10 and 11, the inner columnar body 207 is formed of the component member 217 on the front side of the center of the center region 201 and the component member 217 on the back side of the center of the center region 201. That is, the length of each component member 217 is half that of the inner columnar body 207. Then, the two component members 217 are fixed at a contact surface 209 during manufacture into an integral inner columnar body 207. The two component members 217 are fixed by adhesion with adhesive 211, for example.

In this manner, the center region 201 in the present embodiment is sectioned into two parts in a direction perpendicular to the longitudinal direction.

The dimensions of the gauge carrier 200 according to Embodiment 3 can be the following. For example, the outer diameter of the inner columnar body 207 can be 1.5 mm, the inner diameter can be 0.4 mm, and the length can be 150 mm. The outer diameter of the outer columnar body 208 can be 3.0 mm, the inner diameter can be 2.0 mm, and the length ($l_2$) can be 100 mm.

When epoxy resin is used as the material of the inner columnar body 207 and SUS304 is used as the material of the outer columnar body 208, the magnification factor $\alpha$ of strain in the center region 201 relative to strain in the object under measurement 300 is about 12.7 times according to Expression (3).

Other structures are similar to Embodiment 1. Other structures may also be similar to Embodiment 2.

As described above, the optical fiber displacement sensor 1 according to Embodiment 3 is composed of the inner columnar body 207 located in the entire areas of the split regions 202 and the center region 201, and the outer columnar bodies 208 located only in the split regions 202, such that the split regions 202 are double-structured.

The optical fiber displacement sensor 1 according to Embodiment 3 thereby can provide an effect of a breakage being less likely to occur between the center region 201 and the split regions 202, in addition to similar effects to Embodiment 1. Also, according to Embodiment 3, the manufacturability of the optical fiber displacement sensor 1 can be improved.

Although, in Embodiment 3, a structure where the inner columnar body 207 is formed of two component members 217 and the two component members 217 are connected during manufacture has been described, the inner columnar body 207 may be initially integrally formed without being sectioned into the two component members 217.

Also, the center region 201 illustrated in Embodiments 1 and 2 may be sectioned into two parts in a direction perpendicular to the longitudinal direction, like the center region 201 in Embodiment 3.

Embodiment 4.

Next, as Embodiment 4, a method of manufacturing the optical fiber displacement sensor 1 illustrated in Embodiments 1 to 3 is described.

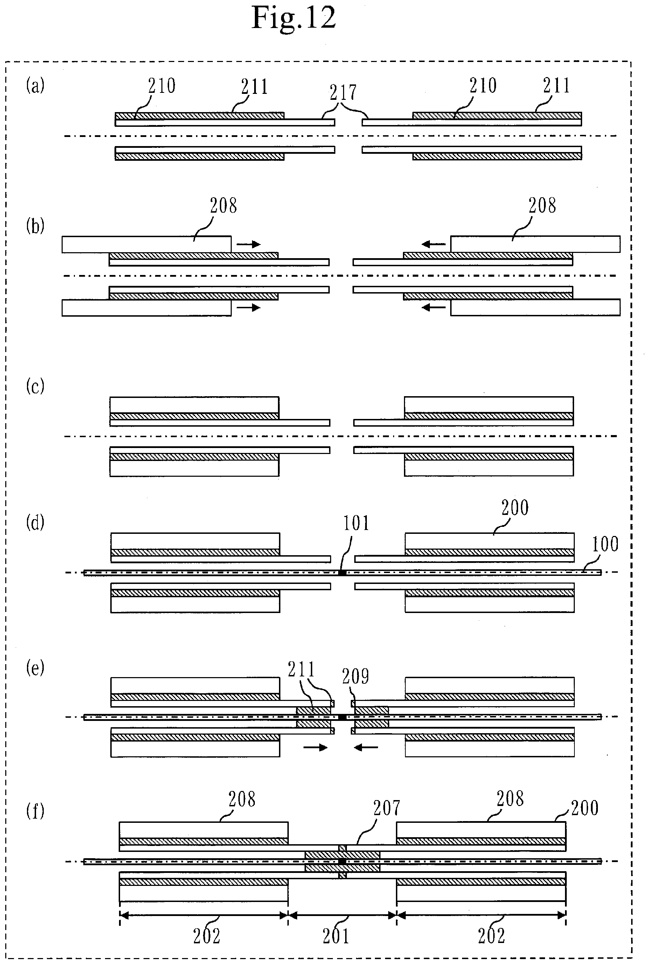

FIG. 12 illustrates the method of manufacturing the optical fiber displacement sensor 1 according to Embodiment 4.

FIG. 12 illustrates a method of manufacturing the double-structured optical fiber displacement sensor 1 composed of the inner columnar body 207 and the outer columnar bodies 208 according to Embodiment 3 as an example. FIG. 12 also illustrates an example of forming the inner columnar body 207 by connecting the two component members 217 as described in Embodiment 3.

The method of manufacture illustrated in FIG. 12 is generally divided into a first manufacturing step and a second manufacturing step.

In the first manufacturing step, the gauge carrier 200 is manufactured.

First, as illustrated in (a) of FIG. 12, adhesive 211 is applied to contact surfaces 210 of the two component members 217 with the outer columnar bodies 208.

In (a) of FIG. 12, an instance where the adhesive 211 is only applied to the contact surfaces 210 on the outer radial surfaces of the component members 217 is illustrated. Additionally or alternatively, the adhesive 211 may be applied to the inner radial surfaces of the outer columnar bodies 208.

Prior to application of the adhesive 211, pretreatment may be performed on the contact surfaces 210 of the component members 217 in order to improve adhesion. The pretreatment can be grinding processing with abrasive paper, for example.

Next, the component members 217 are inserted into the outer columnar bodies 208 as illustrated in (b) of FIG. 12, and the component members 217 and the outer columnar bodies 208 are placed at positions that align the ends of the component members 217 with the ends of the outer columnar bodies 208 as illustrated in (c) of FIG. 12. Then, in the state illustrated in (c) of FIG. 12, the positional relation between the component members 217 and the outer columnar bodies 208 is maintained until the adhesive 211 has hardened.

Next, in the second manufacturing step, the gauge carrier 200 and the optical fiber 100 are combined to manufacture the optical fiber displacement sensor 1.

First, as illustrated in (d) of FIG. 12, the optical fiber 100 is placed in the gauge carrier 200. Specifically, the optical fiber 100 is passed into the two component members 217.

Next, as illustrated in (e) of FIG. 12, adhesive 211 is applied to the portions of the two component members 217 to which the optical fiber 100 is to be fixed. That is, adhesive 211 is applied to the portions corresponding to the center region 201.

The adhesive 211 is also applied to the contact surfaces 209 of the component members 217.

Prior to application of the adhesive 211, pretreatment may be performed on the surfaces to which the adhesive 211 is to be applied in order to improve adhesion. The pretreatment can be grinding processing with abrasive paper, for example.

Then, as illustrated in (f) of FIG. 12, the component members 217 and the outer columnar bodies 208 are placed at a position where the contact surfaces 209 of the two component members 217 come into contact with each other. Then, in the state illustrated in (f) of FIG. 12, the positional relation between the component members 217 and the outer columnar bodies 208 is maintained until the adhesive 211 has hardened.

In doing so, the positional relation between the component members 217 and the outer columnar bodies 208 may be maintained with the optical fiber 100 tensioned. By fixing the optical fiber 100 to the component members 217 with the optical fiber 100 pre-tensioned, measurement of strain in a direction of compression becomes possible.

When the adhesive 211 has hardened in the state of (f) of FIG. 12, the two component members 217 becomes integral to form the inner columnar body 207. As a result, the optical fiber displacement sensor 1 is completed.

From the foregoing, the method of manufacturing the optical fiber displacement sensor 1 according to the present embodiment includes the first manufacturing step of manufacturing the gauge carrier 200 by combining the center region 201 with the split regions 202, and the second manufacturing step of manufacturing the optical fiber displacement sensor 1 by combining the gauge carrier 200 with the optical fiber 100.

While the present embodiment described a method of manufacturing the optical fiber displacement sensor 1 illustrated in Embodiment 3, the optical fiber displacement sensor 1 illustrated in Embodiment 1 and the optical fiber displacement sensor 1 illustrated in Embodiment 2 can also be manufactured in a similar manner.

The optical fiber displacement sensor 1 illustrated in Embodiment 1 can be manufactured in the following manner, for example.

(1) Adhesive 211 is applied to the two contact surfaces 204 of the center region 201.
(2) The split regions 202 are fixed to the two contact surfaces 204.
(3) Adhesive 211 is applied to the groove 205 in the center region 201.
(4) The optical fiber 100 is placed in the groove 205 of the center region 201 and the two split regions 202 (the optical fiber 100 is fixed by the adhesive 211 in the groove 205 of the center region 201).

The optical fiber displacement sensor 1 illustrated in Embodiment 2 can be manufactured in the following manner, for example.

(1) Adhesive 211 is applied to the hole 206 in the center region 201.
(2) The optical fiber 100 is inserted into the hole 206 (the optical fiber 100 is fixed by the hole 206 in the center region 201).
(3) Adhesive 211 is applied to the two contact surfaces 204 of the center region 201.
(4) The optical fiber 100 is passed through the hole 206 in the split regions 202, fixing the split regions 202 to the two contact surfaces 204.

While Embodiments 1 to 4 have been described above, two or more of these embodiments may be practiced in combination.
Alternatively, one of these embodiments may be practiced partially.
Alternatively, two or more of these embodiments may be practiced in partial combination.
Also, structures and procedures described in these embodiments may be modified as needed.

List of Reference Signs

1: optical fiber displacement sensor
100: optical fiber
101: gauge portion
102: FBG portion
103: core
104: clad
105: coating portion
200: gauge carrier
201: center region
202: split region
203: affixing portion
204: contact surface
205: groove
206: hole
207: inner columnar body
208: outer columnar body
209: contact surface
210: contact surface
211: adhesive
217: component member
300: object under measurement
301: affixing adhesive

**Claims**

1. A gauge carrier to hold an optical fiber which has a gauge portion of a predefined length used for detection of strain, provided in one axial part thereof, the gauge carrier comprising:
a first holding portion which has a predefined stiffness and holds the gauge wherein a length in a longitudinal direction of the gauge carrier is equal to or greater than a length of the gauge portion; andtwo second holding portions, wherein each of the second holding portions has a stiffness different from the stiffness of the first holding portion, a total length of lengths of the respective second holding portions in the longitudinal direction of the gauge carrier is greater than the length of the first holding portion in the longitudinal direction of the gauge carrier, one of the second holding portions is positioned in front of the first holding portion and holds a part of the optical fiber that is in front of the gauge portion, and another is positioned in back of the first holding portion and holds a part of the optical fiber that is in back of the gauge portion.

2. The gauge carrier according to claim 1, wherein

the stiffness of each of the second holding portions is higher than the stiffness of the one holding portion.

3. The gauge carrier according to claim 1, wherein
each of the first holding portion and the second holding portions is a plate-shaped body having, in the longitudinal direction of the gauge carrier, a groove to hold the optical fiber.

4. The gauge carrier according to claim 1, wherein
each of the first holding portion and the second holding portions is a columnar body having a hole to hold the optical fiber.

5. The gauge carrier according to claim 4, wherein
each of the first holding portion and the second holding portions is any one of a circular cylinder, a half cylinder, a sector cylinder, an elliptical cylinder, and a square column.

6. The gauge carrier according to claim 1, wherein

   the first holding portion is a middle part of an inner columnar body having a hole to hold the optical fiber,
   the second holding portion that is positioned in front of the first holding portion is composed of a front part of the middle part of the inner columnar body and an outer columnar body covering the front part, and
   the second holding portion that is positioned in back of the first holding portion is composed of a back part of the middle part of the inner columnar body and an outer columnar body covering the back part.

7. The gauge carrier according to claim 1, wherein
the second holding portions are of a same material as one another, while materials are different between each of the second holding portions and the first holding portion, thus making the stiffness of the second holding portions different from the stiffness of the first holding portion.

8. The gauge carrier according to claim 1, wherein
the second holding portions are of a same thickness as one another, while thicknesses are different between each of the second holding portions and the first holding portion, thus making the stiffness of the second holding portions different from the stiffness of the first holding portion.

9. The gauge carrier according to claim 1, wherein
when the stiffness of the first holding portion is indicated as $E_1A_1$, the stiffness of each of the second holding portions is indicated as $E_2A_2$, the length of the first holding portion in the longitudinal direction of the gauge carrier is indicated as $l_1$, and the total length of the lengths of the respective second holding portions in the longitudinal direction of the gauge carrier is indicated as $l_2$, a condition of Expression (1) is satisfied:
FORMULA 1

$$10 \leq \left(1 + \frac{l_2}{l_1}\right) \Big/ \left(1 + \frac{E_1A_1}{E_2A_2} \cdot \frac{l_2}{l_1}\right) \qquad \text{Expression}(1)$$

10. The gauge carrier according to claim 1, wherein
the first holding portion is sectioned into two parts in a direction perpendicular to the longitudinal direction of the gauge carrier.

11. An optical fiber displacement sensor comprising:

   an optical fiber which has a gauge portion of a predefined length used for detection of strain, provided in one axial part thereof; and
   a gauge carrier to hold the optical fiber, wherein
   the gauge carrier includes

      a first holding portion which has a predefined stiffness and holds the gauge portion, wherein a length in a longitudinal direction of the gauge carrier is equal to or greater than a length of the gauge portion, and
      two second holding portions, wherein each of the second holding portions has a stiffness different from the stiffness of the first holding portion, a total length of lengths of the respective second holding portions in the longitudinal direction of the gauge carrier is greater than the length of the first holding portion in the longitudinal direction of the gauge carrier, one of the second holding portions is positioned in front of the first holding portion and holds a part of the optical fiber that is in front of the gauge portion, and another is positioned in back of the first holding portion and holds a part of the optical fiber that is in back of the gauge portion, and

the optical fiber is fixed at least to the first holding portion.

12. The optical fiber displacement sensor according to claim 11, wherein the optical fiber is fixed at least to the first holding portion with the optical fiber tensioned.

13. A method of manufacturing an optical fiber displacement sensor including an optical fiber which has a gauge portion of a predefined length used for detection of strain, provided in one axial part thereof, and a gauge carrier to hold the optical fiber, the method comprising:

a step of combining a first holding portion with two second holding portions to manufacture the gauge carrier, the first holding portion having a predefined stiffness and holding the gauge portion, wherein a length in a longitudinal direction of the gauge carrier is equal to or greater than a length of the gauge portion, each of the second holding portions having a stiffness different from the stiffness of the first holding portion, wherein a total length of lengths of the respective second holding portions in the longitudinal direction of the gauge carrier is greater than the length of the first holding portion in the longitudinal direction of the gauge carrier, one of the second holding portions is positioned in front of the first holding portion and holds a part of the optical fiber that is in front of the gauge portion, and another is positioned in back of the first holding portion and holds a part of the optical fiber that is in back of the gauge portion; and
a step of fixing the optical fiber at least to the first holding portion.

# Fig. 1

# Fig. 2

# Fig. 3

# Fig. 4

# Fig. 5

(a)

(b)

(c)

# Fig. 6

# Fig. 7

# Fig. 8

EP 4 283 251 A1

# Fig. 9

(a)

(b)

1

CURVED SURFACE

1

CURVED SURFACE

# Fig.10

202

202

217

1

207

100

200

208

209

208

201

BACK

FRONT

# Fig.11

(a)

(b)

# Fig.12

<table>
<tr><td colspan="2" align="center">**INTERNATIONAL SEARCH REPORT**</td><td colspan="2">International application No.<br>PCT/JP2021/002392</td></tr>
</table>

**A. CLASSIFICATION OF SUBJECT MATTER**
G01B 11/16(2006.01)i; G01D 5/353(2006.01)i
FI: G01B11/16 G; G01D5/353 C

According to International Patent Classification (IPC) or to both national classification and IPC

**B. FIELDS SEARCHED**

Minimum documentation searched (classification system followed by classification symbols)
G01B11/00-11/30; G01D5/26-5/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2008-275489 A (KAJIMA CORPORATION) 13 November 2008 (2008-11-13) paragraphs [0031], [0047]-[0048], fig. 6 | 1-3, 8-9, 11-13<br>9-10, 12<br>4-7 |
| X<br>Y<br>A | CN 2646666 Y (LIU, Yuliang) 06 October 2004 (2004-10-06) page 5, line 16 to page 6, line 22, fig. 1 | 1-2, 4-8, 11, 13<br>9-10, 12<br>3 |
| Y | JP 2012-88155 A (HITACHI, LTD.) 10 May 2012 (2012-05-10) fig. 8A, 13A | 10 |
| A | JP 2005-337831 A (MITSUBISHI ELECTRIC CORP.) 08 December 2005 (2005-12-08) entire text | 1-2, 4-13 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 March 2021 (17.03.2021) | Date of mailing of the international search report<br>30 March 2021 (30.03.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2021/002392

| Patent Documents referred in the Report | Publication Date | Patent Family | Publication Date |
|---|---|---|---|
| JP 2008-275489 A | 13 Nov. 2008 | (Family: none) | |
| CN 2646666 Y | 06 Oct. 2004 | (Family: none) | |
| JP 2012-88155 A | 10 May 2012 | (Family: none) | |
| JP 2005-337831 A | 08 Dec. 2005 | (Family: none) | |

Form PCT/ISA/210 (patent family annex) (January 2015)

**EP 4 283 251 A1**

**REFERENCES CITED IN THE DESCRIPTION**

**Patent documents cited in the description**

- JP 2008134155 A